# Europäisches Patentamt

## European Patent Office

## Office européen des brevets

(11) Publication number: **0 077 347**

**B1**

(12) **EUROPEAN PATENT SPECIFICATION**

(45) Date of publication of patent specification: **08.01.86**

(51) Int. Cl.⁴: **G 06 K 19/08, B 32 B 27/00**

(21) Application number: **82901135.2**

(22) Date of filing: **21.04.82**

(86) International application number:
**PCT/GB82/00117**

(87) International publication number:
**WO 82/03713 28.10.82 Gazette 82/26**

(54) SECURITY DOCUMENTS.

(30) Priority: **23.04.81 GB 8112514**

(43) Date of publication of application:
**27.04.83 Bulletin 83/17**

(45) Publication of the grant of the patent:
**08.01.86 Bulletin 86/02**

(84) Designated Contracting States:
**GB**

(56) References cited:
**DE-A-2 305 165**
**FR-A-1 578 095**
**GB-A-1 123 274**
**US-A-3 594 933**
**US-A-4 120 445**

(73) Proprietor: **THOMAS DE LA RUE & COMPANY LIMITED**
**De La Rue House 3/5 Burlington Gardens**
**GB-London W1A 1DL (GB)**

(72) Inventor: **HASLOP, John Martin**
**22 Radcot Close**
**Woodley, Berkshire (GB)**
Inventor: **ELDRED, James Raymond**
**21 Hill Farm Road Marlow Bottom**
**Marlow, Buckinghamshire (GB)**

(74) Representative: **Jones, Alan John et al**
**CARPMAELS & RANSFORD 43 Bloomsbury Square**
**London, WC1A 2RA (GB)**

Courier Press, Leamington Spa, England.

## Description

This invention relates to security documents incorporating features, markings or devices which are detectable upon examination of the document under radiation of a particular kind.

Although the invention is not so limited, the security documents of this invention are particularly useful as identity cards or the like.

A security document of this type is known from DE—A—2305165, which describes an identification card such as a credit card carrying coded information not visible in ambient light auditions of normal intensity, but detectable by passing radiant energy of a given frequency and sufficient intensity through the card.

It is the aim of this invention to provide an improved security document of the aforesaid type.

According to this invention there is provided a substantially non-translucent security document comprising a pair of sheets in at least partial face to face surface abutting relationship, each of said sheets being substantially non-absorbent of radiation of a given frequency, and a security device comprising an ink-printed impression on one of the sheets detectable upon inspection of the security document by radiation of said given frequency, characterised in that said radiation is X-rays and β radiation, the ink-printed impression is a surface printing of a thickness less than 30 microns and the ink comprises an inorganic metallic compound or barium, tungsten, bismuth, titanium, neodymium or lead such that the ink is substantially absorbent of X-rays and β radiation.

Preferably the sheets are fibrous, for example, paper of between 70 and 400 gms/sq metre and more particularly of between 90 and 300 gms/sq metre. Alternatively, the sheets may be of other materials, for example, synthetic polymeric materials.

Preferably inorganic metallic compound is present to the extent, on a weight by weight basis, of between 30 and 80%.

Preferably, so as to minimise the risk that the security device may be detected by inspecting the document by non X-ray techniques, such as by subjecting it to the transmission of visible light, the security device is printed in an ink which has a colour closely matching that of the sheet on which it is printed and which has substantially the same light transmitting properties as the said sheet. In so far as the printing of such a security device may cause production control problems because of the "invisible" nature of the printing, the security device may be printed in a doped ink which includes traces of such as visible pigments or U.V. Fluorescers sufficient to overcome said production control difficulties without rendering the security device detectable by non X-ray, electro-magnetic radiation detection techniques.

The printed impression comprising the security device is preferably of an applied thickness of about 15 microns or less. It may be applied by any, especially off-set, printing method or technique capable of giving rise to such a printed impression.

The security feature may be of a design or shape which may be recognised as such when the document is subjected to X-rays or β radiation.

The exposed surfaces of the sheet materials may bear printed or other devices or legends which are typically to be found on the surface of security documents, provided that such devices or legends are not substantially absorbent of said X-rays and β radiation.

The sheet materials may be encapsulated between adhesively secured or heat-sealed transparent surface sheets which are not substantially absorbent of X-rays and β radiation. Typically each such encapsulating sheet may have a substance of about 20 gms per square metre.

Preferably sheet materials of the pair are adhesively bonded one to another, either around their edges or more extensively between their abutting surfaces. Conveniently the said pair is formed from a centre-folded single sheet.

We have found that soft X-rays of wavelength of up to 0.2 nm and more particularly about 0.1 nm are particularly useful in relation to the documents of this invention. X-ray cameras and films may be used in the detection of the security documents of this invention but any other suitable apparatus, such as one using scintillation techniques may alternatively be employed.

By way of example, when β radiation inspection techniques are used to detect the security device, a plastics block impregnated with Carbon 14 may be placed on a security document which, in turn, is overlying a film of photographic material. After this latter assembly has been left for a sufficient period, perhaps of about fifteen hours, the photographic film is developed thus to reveal a record of a security device which is opaque to β radiation.

Attempted counterfeiting of the security documents of this invention may result in the production of documents which are deficient in some material respect in relation to the security device of a genuine document.

However, verification of the genuineness of a security document according to this invention may readily be effected particularly by means of X-ray radiation and when this is done, for example at a port or airport in relation to an identity card, the apprehension of the holder of a counterfeit document, if not of the counterfeiter, is probable.

By way of example, the following are ink compositions which may be used to provide the security devices of this invention. All percentages are on a weight by weight basis.

Ink 'A'

| Barium Sulphate | 70% |
| Alkyd Resin | 24% |
| 260/290 Petroleum distillate | 5% |
| Cobalt driers | 1% |

Ink 'B'

Bismuth Oxychloride          50%
Alkyd  Resin                 46.5%
260/290 Petroleum distillate 2.5%
Cobalt driers               1.0%

Ink 'C'

Barium Sulphate              49%
Alkyd resin varnish .
Pigment grinding medium      16%
Blending vehicle            22.5%
Soft Paraffin Wax            8.5%
Cobalt drier                1.0%
Oxime Anti-oxidant          1.0%
Dope Ink                    2.0%

N.B. The Dope Ink is included to render the otherwise "invisible" impressions made from Ink C sufficiently discernible for press control purposes; also that the composition of Ink C may be adjusted so as to include about 3% or less of Linseed Oil, thereby to modify the rheology of the ink.

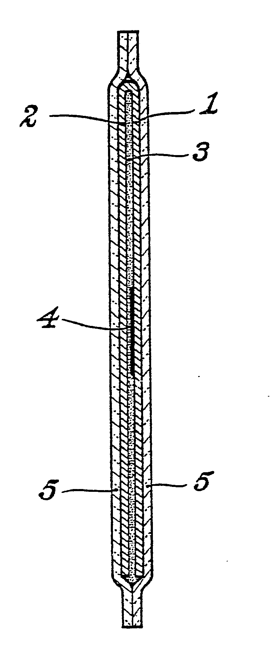

One identity card according to this invention is illustrated diagrammatically in the accompanying drawing.

Layers 1 and 2 of the drawing are formed from a centre folded sheet having a mass of 150 grams sq metre.

On the surface of layer 1 which abuts layers 2 is shown a security device 4 printed in Ink A, prior to the folding of the sheet, by the off-set litho process.

An adhesive bonding the layers 1 and 2 is depicted at 3.

Encapsulating layers of composite polyethylene terephthalate/polyethylene transparent sheets are shown at 5 with the polyethylene components bonded and/or heat sealed to each other and to the layers 1 and 2.

A Faxitron, Model 8040, X-ray camera using a Kodak Industrex C type film was exposed for one minute at 0.5 mA and 13 Kv to make a record of the device.

## Claims

1. A substantially non-translucent security document comprising a pair of sheets (1, 2) in at least partial face to face surface abutting relationship, each of said sheets being substantially non-absorbent of radiation of a given frequency, and a security device (4) comprising an ink-printed impression upon one of the sheets detectable upon inspection of the security document by radiation of said given frequency, characterised in that said radiation is X-rays and β radiation, the ink-printed impression is a surface printing of a thickness of less than 30 microns and the ink comprises an inorganic metallic compound of barium, tungsten, bismuth, titanium, neodymium or lead such that the ink is substantially absorbent of X-rays and β radiation.

2. A security document as claimed in Claim 1 characterised in that the inorganic compound is present in the ink to the extent of between 30% and 80% on a weight by weight basis.

3. A security document as claimed in Claim 1 or Claim 2 in which the inked impression closely matches the colour of the sheet on which the impression is printed.

4. A security document as claimed in any one of Claims 1 to 3 in which the inked impression has light transmission properties which are substantially identical to those of the sheet on which the security device (4) is printed.

## Patentansprüche

1. Praktisch nicht durchscheinendes Sicherheitsdokument, mit einem Paar von Blättern (1, 2), die wenigstens teilweise Vorderseite auf Vorderseite aneinander liegen, wobei jedes dieser Blätter praktisch nicht absorbierend für Strahlung einer gegebenen Frequenz ist, sowie eine Sicherheitsvorrichtung (4), mit einem mit graphischer Farbe gedruckten Eindruck auf einem der Blätter, der nach Untersuchung des Sicherheitsdokumentes durch Strahlung dieser gegebenen Frequenz nachweisbar ist, dadurch gekennzeichnet, daß diese Strahlung Röntgenstrahlung und β-Strahlung ist, der mit graphischer Farbe gedruckte Eindruck ein Oberflächendruck einer Dicke von weniger als 30 μm ist und die graphische Farbe eine anorganische metallische Verbindung von Barium, Wolfram, Wismut, Titan, Neodym oder Blei derart enthält, daß die graphische Farbe Röntgenstrahlung und β-Strahlung im wesentlichen absorbiert.

2. Sicherheitsdokument nach Anspruch 1, dadurch gekennzeichnet, daß die anorganische Verbindung in der graphischen Farbe in einer Menge von 30 bis 80%, Gewicht/Gewicht, vorliegt.

3. Sicherheitsdokument nach Anspruch 1 oder 2, dadurch gekennzeichnet, daß der Eindruck aus graphischer Farbe der Färbung des Blattes, auf das der Eindruck gedruckt ist, eng entspricht.

4. Sicherheitsdokument nach einem der Ansprüche 1 bis 3, dadurch gekennzeichnet, daß der Eindruck aus graphischer Farbe Lichtdurchlässigkeitseigenschaften aufweist, die praktisch identisch mit denjenigen des Blattes sind, auf welches die Sicherheitsvorrichtung (4) gedruckt ist.

## Revendications

1. Un document de sécurité pratiquement non-translucide comportant une paire de feuilles (1, 2) en relation au moins partielle d'aboutement de surface, face à face, chacune desdites feuilles n'absorbant pratiquement pas de radiations d'une fréquence donnée, et un dispositif de sécurité (4) comportant une impression imprimée à l'encre sur une des feuilles, détectable lors de l'inspection du document de sécurité par des radiations de ladite fréquence donnée, caractérisé en ce que lesdites radiations sont des rayons X et des radiations bêta, l'impression imprimée à l'encre est une impression de surface d'une épaisseur inférieure à 30 microns et l'encre comprend un composé métallique inorganique de baryum, de tungstène, de bismuth, de titane, de néodyme ou de plomb de sorte que l'encre absorbe pratiquement les rayons X et les radiations bêta.

2. Un document de sécurité tel que revendiqué dans la revendication 1, caractérisé en ce que le composé inorganique est présent dans l'encre à une teneur comprise entre 30 et 80% en poids sur une base pondérale.

3. Un document de sécurité tel que revendiqué dans la revendication 1 ou 2 dans lequel l'impression à l'encre s'adapte fidèlement à la couleur de la feuille sur laquelle l'impression est imprimée.

4. Un document de sécurité tel que revendiqué dans l'une quelconque des revendications 1 à 3, dans lequel l'impression à l'encre présente des propriétés de transmission de la lumière qui sont pratiquement identiques à celles de la feuille sur laquelle le dispositif de sécurité (4) est imprimé.